# EUROPEAN PATENT SPECIFICATION

(11) **EP 4 519 490 B1**
(45) Date of publication and mention of the grant of the patent: **04.02.2026**
(21) Application number: 23724243.3
(22) Date of filing: 02.05.2023
(51) Int. Cl.: D06M 11/61, D06M 11/79, D06M 13/02, D06M 15/227, D06M 15/263, D06M 15/356, D06M 15/693, B60C 9/00, B29B 15/12, B29D 30/38, B29D 30/40, C08L 91/06, C03C 25/27, B60C 1/00

(54) **AQUEOUS DIPPING COMPOSITION**
WÄSSRIGE TAUCHZUSAMMENSETZUNG
COMPOSITION AQUEUSE DE TREMPAGE

(30) Priority: 02.05.2022 EP 22171140
(43) Date of publication of application: 12.03.2025
(73) Proprietor: Kordsa Teknik Tekstil Anonim Sirketi, 41310 Izmit/Kocaeli (TR)
(72) Inventor: ARACI, Seda, 41310 Kocaeli (TR); ACAR, Ali Ersin, 34342 Istanbul (TR); SEN, Mustafa Yasin, 41310 Kocaeli (TR)
(74) Representative: Müller-Boré & Partner Patentanwälte PartG mbB
(86) International application number: PCT/EP2023/061475
(87) International publication number: WO 2023/213776

(56) References cited:
- EP-A1- 3 702 522
- EP-A1- 3 702 524
- LU-B1- 93 348
- US-A- 4 074 988
- US-A- 4 147 833
- US-B2- 10 487 447

## Description

The present invention relates to a method for producing an aqueous dipping composition for textile reinforcing materials, particularly cords, as well as an aqueous dipping composition obtainable by such method. The aqueous dipping composition is environmentally friendly and is free of primary and secondary amines. It is also further free of resorcinol, formaldehyde, epoxy and isocyanate, and enables synthetic fibers and rubber to be attached to each other by providing a phase between said two structures.

Since the chemical structures of textile reinforcing fibers like cords and rubber are considerably different from each other, said materials are incompatible with each other in terms of their chemical and physical structures. The textile reinforcing synthetic fibers have high strength and low elongation whereas the rubbers contrarily are polymeric materials which have high elongation and low strength. The polar groups (amide, hydroxyl and carbonyl groups) present in the structure of the synthetic fibers are incompatible with the non-polar structures of the rubber. For example, in the cord fabric production for the tire industry this incompatibility is eliminated with water-based Resorcinol-Formaldehyde-Latex (RFL) adhesive solutions which form a phase between the cord and the rubber and enable the rubber and the fiber to be attached to each other.

Main function of RFL is to serve as adhesive attaching two incompatible structures by forming a phase between fiber and rubber. RF functional group within RFL is attached to the polar groups of fiber, Latex (L) group is attached to the fiber with vulcanization so that a rubber-fiber composite structure is formed. The vehicle tire application is amongst the most significant product examples wherein said composite structure is used. Other industrial elastomeric articles such as belts and hoses can also include such textile reinforcing materials. The water based RFL adhesives are applied on the textile via a "dipping" process which is the final step of such strengthening member production like, e.g., cord fabric production. The strength of the bonds formed between the rubber and the fiber is examined by means of adhesion tests. Adhesion is a very important parameter in high tenacity fiber reinforced rubber products, because fiber-rubber adhesion is a critical factor which affects the performance of the elastomeric articles such as tires, belts and hoses.

RFL adhesive formulations have been used as adhesive material in all synthetic fiber reinforced materials for over half century because of its stable structural characteristics and low cost. However, both resorcinol and formaldehyde are classified as being harmful to health and environment. Therefore, efforts have been made to provide alternative adhesive formulations.

Formaldehyde-free dipping solutions for rubber materials reinforced with textile materials have been reported in various studies.

US 2012/0041113 discloses preparing a composition comprising epoxy, blocked isocyanate, an amine-based epoxy curing agent and a vinyl pyridine latex. The fiber cords are immersed in such adhesive composition and then subjected to a drying process and then a heating process.

WO 96/00749 discloses applying dipping solutions formulated with epoxy resins having a functionality of three or greater, and a carboxyl, amide or pyridyl functionalized styrene-butadiene latex, to the polyethylene terephthalate (PET) material and its adhesion strength with rubber.

US 5,118,545 discloses the synthesis of an aramid with multiple double bonds. It is stated that the synthesized resin is applied on the aramid-based cord fabric and the double bonds in aramid resin are vulcanized with the double bonds in rubber, and the amide groups provide physical adhesion to the aramid fiber.

US 4,472,463 discloses dipping non-adhesive activated PET fibers with two step process dipping. The first step dipping comprises aromatic glycidyl ester epoxy and blocked isocyanate, while the second step dipping comprises a latex and an acrylic resin. The latex is a styrene-butadiene-vinyl pyridine copolymer, and the acrylic resin is a carboxylic acid ester copolymer consisting of an alkyl meth(acrylic acid) ester, meth(acrylic) acid and an amide.

US 2004/0249053 discloses an environmentally friendly dipping material, where maleinized polybutadiene is reacted with polyethylene glycol and rendered water soluble. The PET cords modified with epoxy are first dipped with this resin and then with styrene-butadiene-vinyl pyridine latex. However, the stripping-adhesion strength of the rubber with PET cords dipped with this resin is lower than the fabrics with RFL.

JP 2011 069020 A discloses a method for producing a resorcinol formaldehyde-free dipping solution which is prepared by mixing an acrylic resin, an epoxy compound, latex and an epoxy curing agent where polyisocyanate is not among the main component of the dip solution.

JP 2012 224962 A discloses a resorcinol formaldehyde free formulation that contains an epoxy resin, an amine curing agent, a blocked isocyanate, styrene-butadiene latex and styrene-butadiene-vinyl pyridine latices.

JP 2013 064037A discloses a method for producing a resorcinol formaldehyde-free dipping solution which is prepared by mixing an urethane resin having a blocked isocyanate group, an epoxy compound, oxazoline functionalized polymer, a polyethyleneimine, a copolymer containing maleic anhydride repeating unit and a rubber latex. In this adhesive system the oxazoline functional polymer is used as a crosslinking agent and the polyethyleneimine as a basic catalyst and crosslinking agent.

EP 3 702 522 A1 discloses an aqueous dipping composition which is free of resorcinol and formaldehyde and comprises a rubber latex, a blocked isocyanate, a wax, an epoxy-containing compound and a polymer with carboxylic acid functional groups.

Another resorcinol formaldehyde free dipping composition is described in CN 106084362. This composition consists of a blocked isocyanate, an epoxy compound, a rubber latex and a rubber modifier.

Furthermore, dipping or coating compositions are described in US 4,074,988, US 4,147,833, LU 93 348 B1, and EP 3 702 524 A1, respectively.

Accordingly, the technical problem underlying the present invention is to provide a dipping material for textile reinforcing materials, which is composed of more environmentally friendly chemicals, i.e., by not using formaldehyde and resorcinol, but achieving similar performances, particularly in terms of adhesion.

Another technical problem underlying the present invention is to provide a production method for such dipping material, which takes shorter time than methods used in the state of the art.

A further technical problem underlying the present invention is to provide a dipping material for cords, which is light in color and thus makes it possible to produce colorful cords.

The solution to the above technical problems is provided by the embodiments characterized in the claims.

In general, the production method for the aqueous dipping composition for the textile reinforcing materials or cords comprises the steps of:
- adding a polymer with functional groups selected from carboxylic acid groups, sulfonic acid groups or phosphonic acid groups, into water,
- adjusting pH value,
- adding latex to the composition,
- optionally adding a rubber modifier selected from the group consisting of carbon black, silica, lignin, pottery clay powder, mica powder, kaolin, bentonite, liquid paraffin, solid paraffin, or wax or combinations thereof, to the composition,
- obtaining the dipping material.

In particular, according to the present invention, there is provided a method for producing an aqueous dipping composition for textile reinforcing materials, particularly cords, characterized by the steps of
- adding at least one polymer with functional groups selected from carboxylic acid groups, sulfonic acid groups or phosphonic acid groups, into water,
- adjusting the pH value until pH 5-11 by adding a volatile base selected from ammonia hydroxide or ammonia,
- adding at least one latex, wherein the at least one latex is a vinyl pyridine (VP) latex,
- optionally adding at least one rubber modifier selected from the group consisting of carbon black, silica, lignin, pottery clay powder, mica powder, kaolin, bentonite, liquid paraffin, solid paraffin, or wax or combinations thereof, to the composition,
- obtaining the aqueous dipping composition,

wherein the solid-based weight ratio of the latex to the polymer with functional groups selected from carboxylic acid groups, sulfonic acid groups or phosphonic acid groups is at least 5, with the proviso that the obtained aqueous dipping composition is essentially free of resorcinol, formaldehyde, epoxy and isocyanate. Also, primary and secondary amines are absent,
wherein the aqueous dipping composition comprises the at least one polymer with functional groups selected from carboxylic acid groups, sulfonic acid groups or phosphonic acid groups, in an amount of 0.1-15 % by weight, the at least one latex in an amount of 75-97.5% by weight, and optionally the at least one rubber modifier in an amount of 1 to 25% by weight based on the total solid weight of the aqueous dipping solution.

The dipping material for the textile reinforcing materials, particularly cords, and the production method thereof has been developed to fulfill the objectives of the present invention.

The types of bonds which dictate the final microstructure of the polymer network in the adhesive after the curing process, determine both the initial adhesion and the adhesion retention performance (i.e., retention of adhesion after aging, also called aged adhesion) of the textile reinforcing materials or cords, respectively. A high initial adhesion does not necessarily mean that the textile reinforcing materials or cord will retain such high adhesion over time. In fact, when one of the dipping solution components is absent or its amount is outside the range adopted in the present invention, the adhesion retention of the the textile reinforcing materials or cords goes down to off-spec values despite its acceptable initial adhesion. Therefore, to achieve the targeted adhesion performances, each component of the dipping formulation should be used in an optimum amount.

In the present invention, a volatile base, particularly ammonium hydroxide is employed to preserve the acidic character of the carboxylic acid, sulfonic acid or phosphonic acid containing resin [e.g., poly(acrylic acid), poly(sulfonic acid), or poly(phosphonic acid)] during the curing step, which occurs well above the boiling point of ammonia. The use of the volatile base, particularly ammonium hydroxide, ensures that the functional groups selected from carboxylic acid groups, sulfonic acid groups or phosphonic acid groups, which momentarily are transformed to their corresponding ammonium salts upon the addition of e.g. ammonium hydroxide, are recuperated as the ammonia evaporates during the high temperature curing process. The resulting polycarboxylic acid, polysulfonic acid or polyphosphonic acid can then interact with other dipping components. In fact, when permanent carboxylate, sulfonic acid, or phosphonic acid salt forming bases such as sodium hydroxide are employed, an off spec adhesion retention performance is observed.

In the production method for dipping material for the textile reinforcing materials or cords according to the present invention, first, a polymer with functional groups selected from carboxylic acid groups, sulfonic acid groups or phosphonic acid groups, is added into water. Such polymer is based on monomers preferably containing 0.5 to 100 mol%, preferably 5 to 100 mol%, more preferably 20 to 100 mol%, even more preferably 50 to 100 mol% carboxylic acid or sulfonic acid groups or phosphonic acid groups without ruling out further functional groups. It can have any suitable molecular weight and preferably has a weight average molecular weight of 500 to 500,000 g/mol and more preferably 1,000 to 300,000 g/mol, determined by GPC. In the absence of the polymer with carboxylic acid or sulfonic acid or phosphonic acid functional groups, the adhesive performance of the dip solution decreases. Preferably, a polymer with carboxylic acid functional groups is used.

As a polymer with carboxylic acid functional groups, preferably, the polymer is based on monomers selected from acrylic acid, methacrylic acid, esters of acrylic acid, esters of methacrylic acid, itaconic acid, crotonic acid, cinnamic acid, maleic acid and combinations thereof.

The polymer with carboxylic acid functional groups may also be a copolymer composed of two or more monomers such as Sokalan CP12S from BASF which is a copolymer of acrylic acid and maleic acid with a molecular weight of 3.000 g/mol.

The polymer with carboxylic acid functional groups may also include a polyalcohol as a crosslinker and suitable polymers with carboxylic acid functional groups and polyalcohol crosslinkers are available, for example, under the Acrodur 950L and Aquaset TF150 trade names from BASF and Dow Chemical, respectively.

As a polymer with sulfonic acid functional groups, poly(p-styrenesulfonic acid) or any other suitable polysulfonic acid can be mentioned.

As a polymer with phosphonic acid functional groups, any suitable polyphosphonic acid can be mentioned, for example, poly(vinyl phosphonic acid) which is commercially available from e.g. Sigma Aldrich, or other polymers obtained through hydrophosphonylation by addition of H-phosphonates to alkenes using metal-based catalyst.

Then, the pH value of this composition comprising water and a polymer with carboxylic acid or sulfonic acid or phosphonic acid functional groups is adjusted. According to the invention, a volatile base is added to the composition until the pH value of the composition is 5-11. In cases where pH is below 5, the homogeneity of the dipping solution is disturbed as observed in the form of local agglomerations. Preferably, ammonium hydroxide is used.

After the pH is adjusted to the desired level, latex is added to the composition. In accordance with the present invention, the latex employed is a vinyl pyridine (VP) latex. Preferably, the latex is a styrene-butadiene-vinylpyridine rubber latex (VP). A preferred example of a styrene-butadiene-vinylpyridine rubber latex is a latex which comprises 10-20% 2-vinylpyridine, 10-20% styrene and 60-80% butadiene monomers. Preferably, the butadiene component is selected from the group consisting of 1,3-butadiene and 2-methyl-1,3-butadiene. The styrene component is preferably selected from the group consisting of styrene, α-methylstyrene, 2-methylstyrene, 3-methylstyrene, 4-methylstyrene, 2,4-diisopropylstyrene, 2,4-dimethylstyrene, 4-t-butylstyrene and hydroxymethylstyrene. The vinylpyridine monomer is preferably selected from the group consisting of 2-vinylpyridine, 3-vinylpyridine, 4-vinylpyridine, 2-methyl-5-vinylpyridine and 5-ethyl-2-vinylpyridine. Typically, the solid amount inside the latex is between 40-45 % by weight, however, latexes with higher solid contents can also be applied.

The rubber latex of the aqueous dipping solution can also be a mixture of various latexes. For example, the rubber latex can comprise a styrene-butadiene-vinylpyridine rubber latex and a styrene-butadiene latex as further latex. If such latex mixture is employed, the vinyl pyridine (VP) latex makes up more than 50 weight % of such latex mixture.

Then, in a particular embodiment of the present invention, a rubber modifier selected from the group consisting of carbon black, silica, lignin, pottery clay powder, mica powder, kaolin, bentonite, liquid paraffin, solid paraffin, or wax or combinations thereof, is added into the composition. In a preferred embodiment of the present invention, wax is added as such rubber modifier. Preferably, the wax can be selected from the group consisting of paraffin wax, microcrystalline wax, synthetic wax, wax from natural sources such as from honey bees, carnauba and combinations thereof. More specifically, the waxes can include branched and/or unbranched hydrocarbons, having the main fraction (i.e., the middle 80% fraction) with a carbon chain length from C15 to C100. Particularly, microcrystalline wax (i.e. having branched structures of higher molecular weight (40-70 carbon atoms)) can be used. When the dipping material composition contains such rubber modifier like wax, the aged adhesion (or shelf life of the product) between the composition and the fibers is improved.

The dipping solution is obtained by adding all materials mentioned in the previous steps into the water at room temperature and stirring it. Thus, according to the present invention the components (polymer with carboxylic acid, sulfonic acid or phosphonic acid groups, volatile base like ammonium hydroxide, latex and optionally rubber modifier like wax) are employed at the same time, i.e., in a single step.

In accordance with the present invention, the dipping solution essentially does not contain resorcinol, formaldehyde, epoxy and isocyanate. That is, the dipping solution according to the present invention is essentially free of resorcinol, resorcinol precondensates, formaldehyde and formaldehyde-releasing substances as well as epoxy and isocyanate compounds. In the context of the present invention, the term "essentially free" is to be understood in that these substances are allowed to be present only in amounts which do not materially affect the essential characteristics of the dipping solution. For example, the amount of these substances shall not go beyond trace amounts arising from some contamination. Typically, not more than 0.1% by weight (dry weight), based on the total weight of the dipping solution, of each of resorcinol, resorcinol precondensates, formaldehyde and formaldehyde-releasing, epoxy and isocyanate substances shall be contained in the dipping solution, i.e., 0.1% by weight is the maximum amount individually for each of the above components. Preferably, the content of resorcinol, resorcinol precondensates, formaldehyde and formaldehyde releasing, epoxy and isocyanate substances in the dipping solution is 0% by weight. A dipping solution which is free of resorcinol, resorcinol precondensates, formaldehyde and formaldehyde-releasing substances is advantageous, since it avoids the use of these compounds which are harmful to the environment and health.

According to the present invention, the aqueous dipping composition comprises the at least one polymer with functional groups selected from carboxylic acid groups, sulfonic acid groups or phosphonic acid groups, in an amount of 0.1-15 % by weight, the at least one latex in an amount of 75-97.5% by weight, and optionally the at least one rubber modifier like wax in an amount of 1 to 25% by weight, based on the total solid weight (dip solid) of the aqueous dipping solution. Preferably, the aqueous dipping composition comprises the at least one polymer with functional groups selected from carboxylic acid groups, sulfonic acid groups or phosphoric acid groups, in an amount of 0.5-10 % by weight, more preferably in an amount of 1-5 % by weight. Moreover, the aqueous dipping composition preferably comprises the at least one latex in an amount of 80-95% by weight, more preferably in an amount of 85-90 % by weight. The at least one rubber modifier like wax is preferably contained in an amount of 3 to 20% by weight, more preferably in an amount of 5-15 % by weight.

The aqueous dipping composition according to the present invention is further characterized in that the weight ratio of rubber latex to the polymer with functional groups selected from carboxylic acid groups, sulfonic acid groups or phosphonic acid groups, is at least 5. According to a preferred embodiment of the present invention, the weight ratio of rubber latex to the polymer with functional groups selected from carboxylic acid groups, sulfonic acid groups or phosphonic acid groups, (L/R ratio), is in the range of 5 to 100, particularly 8 to 100. It is particularly preferred that this ratio is in the range of 10 to 75, more particularly preferred 10 to 50. In cases where this ratio is below 5, the viscosity of the dipping solution increases to an extent that the dipping process cannot be carried out properly resulting in non-uniform coating of the fibers, particularly cords, and thus unsatisfactory adhesion performance.

The dipping composition of the present invention can have any suitable solid content. Preferably, the composition has a solid content of 6 to 30% by weight (dry weight), more preferably of 10 to 30% by weight (dry weight), particularly of 15 to 25% by weight (dry weight), sometimes even 20 to 25% by weight (dry weight).

The aqueous dipping composition may further comprise other additives such as but not limited to anti-foaming agents and/or antioxidants and/or wetting agents and/or tackifiers and/or stabilizers, for example against heat, ozone and UV.

The present invention further relates to the use of the aqueous dipping solution according to the present invention for coating a textile reinforcing material. This textile reinforcing material can be any suitable textile reinforcing member. According to a preferred embodiment of the present invention, the textile reinforcing material is based on a material selected from the group consisting of polyesters, polyamides, polyurethanes, glass, carbon, polycarbonates, polyketones and combinations thereof. The most preferred materials for the textile reinforcing material are polyethylene terephthalate, polyethylene naphthalate, rayon, aramid, nylon 6.6, nylon 6 and combinations thereof.

Coating the textile reinforcing material can be done by dipping, spraying foaming or brushing. Preferably, the coating is done by dipping, for example by preparing a bath with the aqueous dipping composition and passing the textile reinforcing material, particularly cords, through this bath.

After the cords are prepared in certain constructions (ply number and twist), they are dipped into such aqueous dipping composition, then dried and cured at between 60-260°C and more preferably between 160-250°C. Subsequently, the dipped cords are pressed into the non-vulcanized (green) rubber composition in molds. This composite material is then cured at a temperature in the range of 100 to 250°C, preferably at a temperature in the range of 130 to 180°C, wherein optionally a pressure in the range of 10 to 200 bar is applied to obtain the final textile reinforced rubber material.

The present invention is further described in the following with reference to examples which, however, are not limiting the scope of the invention.

### Examples:

Cords made from polyester (polyethylene terephthalate (PET), 2-plied, 1440 dtex, 375x375 twisted, non adhesive activated) were pre-treated by dipping the cord into an activation dip composition containing 95,3% by weight of water, 0.9% by weight of Denacol EX313 (an epoxy compound) and 3.8% by weight of Grilbond IL-6 (a blocked polyisocyanate compound) and heat-treated at a temperature between 180 and 250°C.

After treatment with the pre-dip composition, the cords were dipped with the aqueous dipping compositions/solutions the ingredients of which are given in the following tables. These dipping compositions were prepared by adding the various components under stirring at ambient temperature in the amounts and the order given in the tables. It is noted that the tables showing the aqueous dipping formulations provide the total amount (in parts by weight) of the added components and not the dry weight.

The dipped cords were then passed through two additional ovens. The temperature of the 1^{st} oven was kept between 160°C and 220°C; the temperature of the 2^{nd} oven was kept between 200°C and 250°C.

After dipping and subsequent hot-drawing, the cords were embedded in various rubberizing mixtures (compounds#1, 2 and 3), and vulcanized at certain conditions (pressure, time and temperature). The force required to separate the cord bonded with the vulcanized rubber is then measured. The resultant adhesion force values are given relative to the initial force value of RFL reference (control) which is indexed to 100 for each compound.

In addition, the separated areas of the test samples were assessed visually on a scale from 1 to 5 using the following coverage rating.
1) 0% completely free of rubber
2) 25% mainly free of rubber
3) 50% half covered by rubber
4) 75% mainly covered by rubber
5) 100% completely covered by rubber

The side with the poorest coverage was used for the evaluation. In determining the coverage rating, half ratings (i.e., 3.5) were also permitted.

Furthermore, the storage stability/shelf life stability of the textile reinforcing material being treated with the dipping solutions according to the present invention was evaluated using "compound#3". As a test of the storage stability of the treated textile reinforcing material under real conditions, an accelerated ageing test was conducted by ageing the treated textile reinforcing material at 60°C for 72 hours, in an air circulating oven. For the accelerated aging test, the samples were put in the oven wound onto appropriate supports, avoiding stretching, twisting, untwisting or the formation of loops. The winding was loose enough that possible shrinkage could occur during drying without causing tension on the sample. The aged textile reinforcing material was then tested in the same manner as the fresh textile reinforcing material treated with the dipping solution according to the present invention. The adhesion results are also provided in the same table. The resultant force values are given relative to the initial force value of RFL reference (control) with compound#3 which is indexed to 100.

### Example 1 to 5 (Table 1):

In the Examples 1 to 5, the effect of resin composition on adhesion is presented. When an epoxy and/or isocyanate is present as "the resin forming component" in the dipping composition (Examples 1,2 and 3), poor adhesion performance is observed. Adding a polymer with carboxylic acid functional groups to the composition containing epoxy and isocyanate (Example 4) while keeping L/R ratio the same also leads to insufficient adhesion force. On the other hand, when the textile reinforcing material is treated with the dipping composition according to the present invention (Example 5), noticeable improvement in both initial adhesions and aged adhesion is observed.

### Example 6 to 11 (Table 1):

In the Examples 6 to 11, the effect of the weight ratio of latex (L) to resin (R) on adhesion is given. Better aged adhesion results than RFL reference can be obtained when L/R ratio is 35 or lower. Reducing this ratio further than 8 results in excessive viscosity build up in the dipping composition, which results in decreased adhesion as well as difficulty in handling the dipping equipment.

### Examples 12 to 15 (Table 2):

The effect of SBR/VP ratio in the dipping composition on adhesion is presented in the Examples 12 to 15. When the amount of SBR is more than 50% in the latex mixture, adhesions dropped noticeably indicating that the latex should preferably contain functional groups that interact with the acid functionalities where donor-acceptor type of pairs are formed (such as hydrogen bonding with the 2-vinylpyridine units of the VP latex).

### Examples 16 to 20 (Table 2):

The effect of using microcrystalline wax on the adhesion performance is presented in the Examples 16 to 20. The presence of wax shows its effect especially in the aged adhesion (Examples 17, 18, 19 and 20); and the optimum performance is observed when wax% (based on total solid) is 5% (Example 18) or more.

### Examples 21 to 22 (Table 3):

The effect of the type of base used to adjust the pH of the dipping solution before latex addition on the adhesion performance is presented in the Examples 21 to 22. When sodium hydroxide is used as the base, it forms permanent carboxylate salts with the polymer containing carboxylic acid functional groups resulting in unacceptable adhesion values (Example 22). On the other hand, the use of ammonium hydroxide as the base ensures that carboxylic acid functional groups are momentarily transformed into the corresponding ammonium salts and are recovered upon exposure to high temperatures of the dipping process as the ammonia evaporates. Thus, the resulting carboxylic acid can interact with the other dipping components leading to satisfactory adhesion values (Example 21). Therefore, a volatile base which evaporates during the curing step of the dipping process is used in accordance with the invention.

### Examples 23 to 25 (Table 3):

In the Examples 23 to 25, the effect of using polycarboxylic acids varying in their molecular weights and compositions on the adhesion performance is presented. As can be seen from the data, regardless of the molecular weight and the repeating units of the polycarboxylic acids, good adhesion values could be obtained.

With the dipping solution production method according to the present invention, it is possible to obtain a RF free and epoxy-isocyanate free dipping solution for rubber composites without sacrificing from adhesion performance. Furthermore, this method provides opportunities such as cost and time saving. A further advantage of the invention is that the coated textile reinforcing material, especially cord, can be provided in various colors through addition of colorants, in particular pigments (which are water-dispersible) and/or dyes (which are soluble in water).

Within the framework of these basic concepts, it is possible to develop various embodiments of the inventive dipping material for textile reinforcing materials, particularly cords, and a production method thereof.

In the following Table 1, the examples 1-4 are not according to the invention.

**Table 1**

| | | | | **Effect of resin composition** | | | | | **Effect of L/R** | | | | | |
|---|---|---|---|---|---|---|---|---|---|---|---|---|---|---|
| | | **Ingredient** | **Control (RFL)** | **Example#1** | **Example#2** | **Example#3** | **Example#4** | **Example#5** | **Example#6** | **Example#7** | **Example#8** | **Example#9** | **Example#10** | **Example#11** |
| | | Water | --- | 45.49 | 45.11 | 45.25 | 45.22 | 44.51 | 44.61 | 44.59 | 44.55 | 44.51 | 44.45 | 44.22 |
| | | Ammonia^{(a)} | --- | | | | 0.02 | 0.41 | 0.15 | 0.20 | 0.30 | 0.41 | 0.58 | 1.15 |
| | | Acrodur950L^{(b)} | --- | | | | 0.05 | 1.14 | 0.41 | 0.55 | 0.81 | 1.14 | 1.60 | 3.20 |
| | | Denacol EX313^{(c)} | --- | 0.57 | | 0.21 | 0.20 | | | | | | | |
| | | Grilbond IL6^{(d)} | --- | | 0.95 | 0.60 | 0.57 | | | | | | | |
| | | SBR latex^{(e)} | --- | 7.40 | 7.40 | 7.40 | 7.40 | 7.40 | 7.53 | 7.51 | 7.46 | 7.40 | 7.31 | 7.02 |
| | | VP latex^{(f)} | --- | 41.92 | 41.92 | 41.92 | 41.92 | 41.92 | 42.68 | 42.53 | 42.26 | 41.92 | 41.44 | 39.78 |
| | | Hydrowax-Q^{(g)} | --- | 4.62 | 4.62 | 4.62 | 4.62 | 4.62 | 4.62 | 4.62 | 4.62 | 4.62 | 4.62 | 4.62 |
| | | **TOTAL** | --- | 100.00 | 100.00 | 10000 | 100.00 | 100.00 | 100.00 | 100.00 | 100.00 | 100.00 | 100.00 | 100.00 |
| | | Dip solid% | --- | 23.10 | 23.10 | 23.10 | 23.10 | 23.10 | 23.10 | 23.10 | 23.10 | 23.10 | 23.10 | 23.10 |
| | | Latex/Resin | --- | 35.5 | 35.5 | 35.5 | 35.7 | 35.5 | 100.6 | 75.0 | 50.3 | 35.5 | 25.0 | 12.0 |
| | | SBR% in latex | --- | 15 | 15 | 15 | 15 | 15 | 15 | 15 | 15 | 15 | 15 | 15 |
| | | VP% in latex | --- | 85 | 85 | 85 | 85 | 85 | 85 | 85 | 85 | 85 | 85 | 85 |
| | | %acid (solid-based) | --- | 0.0 | 0.0 | 0.0 | 0.1 | 2.5 | 0.9 | 1.2 | 1.8 | 2.5 | 3.5 | 6.9 |
| | | %latex (solid-based) | --- | 87.5 | 87.5 | 87.5 | 87.5 | 87.5 | 89.1 | 88.8 | 88.2 | 87.5 | 86.5 | 83.1 |
| | | %wax (solid-based) | --- | 10.0 | 10.0 | 10.0 | 10.0 | 10.0 | 10.0 | 10.0 | 10.0 | 10.0 | 10.0 | 10.0 |
| **Adhesion results** | **Compound#1** | adhesion | 100.0 | 30.8 | 67.2 | 55.7 | 61.1 | 112.8 | 93.0 | 114.3 | 103.7 | 118.1 | 111.1 | 105.6 |
| | | coverage | 4.5 | 1.0 | 2.5 | 1.0 | 1.0 | 3.0 | 25 | 4.0 | 2.0 | 4.0 | 4.5 | 4.0 |
| | **Compound#2** | adhesion | 100.0 | 54.6 | 45.9 | 45.7 | 55.1 | 66.8 | 75.9 | 70.9 | 63.0 | 69.9 | 54.2 | 76.1 |
| | | coverage | 5.0 | 1.0 | 1.0 | 1.0 | 1.0 | 5.0 | 3.5 | 5.0 | 3.5 | 3.5 | 2.5 | 4.0 |
| | **Compound#3** | initial adhesion | 100.0 | 10.9 | 18.2 | 20.2 | 17.4 | 108.3 | 43.1 | 80.1 | 104.3 | 105.6 | 101.6 | 102.8 |
| | | initial coverage | 3.0 | 1.0 | 1.0 | 1.0 | 1.0 | 4.5 | 1.0 | 3.0 | 3.5 | 4.5 | 4.0 | 5.0 |
| | | aged adhesion | 86.8 | 14.9 | 22.2 | 0.0 | 50.5 | 102.8 | 50.8 | 83.2 | 87.1 | 108.2 | 93.3 | 108.3 |
| | | aged coverage | 2.5 | 1.0 | 1.0 | 0.0 | 2.0 | 3.5 | 1.0 | 2.0 | 4.0 | 3.5 | 3.5 | 4.5 |

| | | | | | | | | | | | | | | |
|---|---|---|---|---|---|---|---|---|---|---|---|---|---|---|
| ^{a)} Ammonium hydroxide, aqueous solution, 25% by weight; ^{b)} Acrodur 950L: polycarboxylic acid with a molecular weight of 80.000 g/mol, aqueous solution, 50% by weight (BASF); ^{c)} Denacol EX313: glycerol-based polyglycidyl ether (Nagase Chemtex); ^{d)} Grilbond IL-6: caprolactam-blocked 4,4'-methylene diphenyl diisocyanate, aqueous dispersion, 60% by weight (EMS-GRILTECH); ^{e)} Styrene-butadiene copolymer, aqueous dispersion, 41% by weight; ^{f)} Copolymer of butadiene, styrene and 2-vinylpyridine, containing approximately 15 % per weight of vinylpyridine bound in the polymer, aqueous dispersion, 41% by weight; ^{g)} Hydrowax-Q: aqueous paraffin dispersion, 50% by weight (Sasol). | | | | | | | | | | | | | | |

**Table 2**

| | | | | **Effect of latex composition** | | | | **Effect of wax** | | | | |
|---|---|---|---|---|---|---|---|---|---|---|---|---|
| | | **Ingredient** | **Control (RFL)** | **Example#12** | **Example#13** | **Example#14** | **Example#15** | **Example#16** | **Example#17** | **Example#18** | **Example#19** | **Example#20** |
| | | Water | --- | 44.51 | 44.51 | 44.51 | 44.51 | 43.46 | 43.72 | 43.98 | 44.51 | 45.53 |
| | | Ammonia^{(a)} | --- | 0.41 | 0.41 | 0.41 | 0.41 | 0.47 | 0.46 | 0.45 | 0.41 | 0.38 |
| | | Acrodur950L^{(b)} | --- | 1.14 | 1.14 | 1.14 | 1.14 | 1.27 | 1.23 | 1.20 | 1.14 | 1.01 |
| | | SBR latex^{(e)} | --- | | 7.40 | 12.33 | 24.66 | 8.22 | 8.01 | 7.81 | 7.40 | 6.58 |
| | | VP latex^{(f)} | --- | 49.32 | 41.92 | 36.99 | 24.66 | 46.58 | 45.41 | 44.25 | 41.92 | 37.26 |
| | | Hydrowax-Q^{(g)} | --- | 4.62 | 4.62 | 4.62 | 4.62 | | 1.16 | 2.31 | 4.62 | 9.24 |
| | | **TOTAL** | --- | 100.00 | 100.00 | 100.00 | 100.00 | 100.00 | 100.00 | 100.00 | 100.00 | 100.00 |
| | | Dip solid% | --- | 23.1 | 23.1 | 23.1 | 23.1 | 23.1 | 23.1 | 23.1 | 23.1 | 23.1 |
| | | Latex/Resin | --- | 35.5 | 35.5 | 35.5 | 35.5 | 35.5 | 35.5 | 35.5 | 35.5 | 35.5 |
| | | SBR% in latex | --- | 0 | 15 | 25 | 50 | 15 | 15 | 15 | 15 | 15 |
| | | VP% in latex | --- | 100 | 85 | 75 | 50 | 85 | 85 | 85 | 85 | 85 |
| | | %acid (solid-based) | --- | 2.5 | 2.5 | 2.5 | 2.5 | 2.7 | 2.7 | 26 | 2.5 | 2.2 |
| | | %latex (solid-based) | --- | 87.5 | 87.5 | 87.5 | 87.5 | 97.3 | 94.8 | 92.4 | 87.5 | 77.8 |
| | | %wax (solid-based) | --- | 10.0 | 10.0 | 10.0 | 10.0 | 0.0 | 2.5 | 5.0 | 10.0 | 20.0 |
| **Adhesion results** | **Compound#1** | adhesion | 100.0 | 101.3 | 101.4 | 107.2 | 77.3 | 112.1 | 103.9 | 103.0 | 112.8 | 99.9 |
| | | coverage | 4.5 | 3.0 | 3.5 | 3.0 | 3.0 | 4.0 | 3.5 | 3.0 | 3.0 | 3.0 |
| | **Compound#2** | adhesion | 100.0 | 49.1 | 60.7 | 54.7 | 44.9 | 66.8 | 73.2 | 69.7 | 66.8 | 67.1 |
| | | coverage | 5.0 | 2.0 | 3.0 | 2.5 | 1.5 | 5.0 | 5.0 | 5.0 | 5.0 | 5.0 |
| | **Compound#3** | initial adhesion | 100.0 | 94.4 | 105.3 | 106.9 | 65.5 | 114.6 | 111.2 | 112.4 | 108.3 | 102.1 |
| | | initial coverage | 3.0 | 4.0 | 5.0 | 5.0 | 5.0 | 4.5 | 5.0 | 5.0 | 4.5 | 4.5 |
| | | aged adhesion | 86.8 | 81.7 | 96.2 | 106.6 | 69.5 | 32.2 | 76.1 | 103.7 | 102.8 | 116.5 |
| | | aged coverage | 2.5 | 4.0 | 4.5 | 4.5 | 3.5 | 2.0 | 2.5 | 3.5 | 3.5 | 3.5 |

**Table 3**

| | | | | **Effect of base** | | **Effect of acid** | | |
|---|---|---|---|---|---|---|---|---|
| | | **Ingredient** | **Control (RFL)** | **Example#21** | **Example#22** | **Example#23** | **Example#24** | **Example#25** |
| | | Water | --- | 44.51 | 43.04 | 44.51 | 44.50 | 43.80 |
| | | Ammonia^{(a)} | --- | 0.41 | | 0.41 | 0.43 | 0.64 |
| | | NaOH^{(h)} | --- | | 2.47 | | | |
| | | Acrodur950L^{(b)} | --- | 1.14 | 1.13 | 1.14 | | |
| | | Sokalan CP12S⁽ⁱ⁾ | --- | | | | 1.14 | |
| | | Sokalan PA110S^{(j)} | --- | | | | | 1.63 |
| | | SBR latex^{(e)} | --- | 7.40 | 7.32 | 7.40 | 740 | 740 |
| | | VP latex^{(f)} | --- | 41.92 | 41.47 | 41.92 | 41.92 | 41.92 |
| | | Hydrowax-Q^{(g)} | --- | 4.62 | 4.57 | 4.62 | 4.62 | 4.62 |
| | | **TOTAL** | --- | 100.00 | 100.00 | 100.00 | 100.00 | 100.00 |
| | | Dip solid% | --- | 23.10 | 23.10 | 23.10 | 23.10 | 23.10 |
| | | Latex/Resin | --- | 35.5 | 35.5 | 35.5 | 35.5 | 35.5 |
| | | SBR% in latex | --- | 15 | 15 | 15 | 15 | 15 |
| | | VP% in latex | --- | 85 | 85 | 85 | 85 | 85 |
| | | %acid (solid-based) | --- | 2.5 | 2.4 | 2.5 | 2.5 | 2.5 |
| | | %latex (solid-based) | --- | 87.5 | 86.6 | 87.5 | 87.5 | 87.5 |
| | | %wax (solid-based) | --- | 10.0 | 10.2 | 10.0 | 10.0 | 10.0 |
| **Adhesion results** | **Compound#1** | adhesion | 100.0 | 102.1 | 51.4 | 102.1 | 87.7 | 97.6 |
| | | coverage | 4.5 | 5.0 | 1.0 | 5.0 | 5.0 | 5.0 |
| | **Compound#2** | adhesion | 100.0 | 74.2 | 44.3 | 74.2 | 758 | 75.4 |
| | | coverage | 5.0 | 4.0 | 1.0 | 4.0 | 4.5 | 5.0 |
| | **Compound#3** | initial adhesion | 100.0 | 118.8 | 24.0 | 118.8 | 114.0 | 114.9 |
| | | initial coverage | 3.0 | 5.0 | 1.0 | 5.0 | 4.0 | 4.0 |
| | | aged adhesion | 86.8 | 99.6 | 28.0 | 99.6 | 92.7 | 109.9 |
| | | aged coverage | 2.5 | 4.5 | 1.0 | 4.5 | 4.0 | 4.0 |

| | | | | | | | | |
|---|---|---|---|---|---|---|---|---|
| ^{h)} Sodium hydroxide, aqueous solution, 10% by weight; ⁱ⁾ Sokalan CP12S: acrylic acid-maleic acid copolymer with a molecular weight of 3.000 g/mol, aqueous solution, 50% by weight (BASF); ^{j)} Sokalan PA110S: poly(acrylic acid) homopolymer with a molecular weight of 250.000 g/mol, aqueous solution, 35% by weight (BASF); | | | | | | | | |

## Claims

1. A method for producing an aqueous dipping composition for textile reinforcing materials, particularly cords, **characterized by** the steps of
- adding at least one polymer with functional groups selected from carboxylic acid groups, sulfonic acid groups or phosphonic acid groups, into water,
- adjusting the pH value until pH 5-11 by adding a volatile base selected from ammonium hydroxide or ammonia,
- adding at least one latex, wherein the at least one latex is a vinyl pyridine (VP) latex,
- optionally adding at least one rubber modifier selected from the group consisting of carbon black, silica, lignin, pottery clay powder, mica powder, kaolin, bentonite, liquid paraffin, solid paraffin, or wax or combinations thereof, to the composition,
- obtaining the aqueous dipping composition,
wherein the solid-based weight ratio of the latex to the polymer with functional groups selected from carboxylic acid groups, sulfonic acid groups or phosphonic acid groups, is at least 5,
with the proviso that the obtained dipping composition is essentially free of resorcinol, formaldehyde, epoxy and isocyanate, and that primary and secondary amines are absent,
wherein the aqueous dipping composition comprises the at least one polymer with functional groups selected from carboxylic acid groups, sulfonic acid groups or phosphonic acid groups, in an amount of 0.1-15 % by weight, the at least one latex in an amount of 75-97.5% by weight, and optionally the at least one rubber modifier in an amount of 1 to 25% by weight based on the total solid weight of the aqueous dipping solution.

2. The method according to claim 1, wherein the latex is a styrene-butadiene-vinylpyridine rubber latex, preferably a styrene-butadiene-vinylpyridine rubber latex comprising 10-20% by weight 2-vinylpyridine, 10-20% by weight styrene and 60-80% by weight butadiene monomers.

3. The method according to claim 1 or 2, wherein the polymer with carboxylic acid functional groups is derived from monomers selected from acrylic acid, methacrylic acid, esters of acrylic acid, esters of methacrylic acid, itaconic acid, crotonic acid, cinnamic acid, maleic acid and combinations thereof.

4. The method according to any one of claims 1 to 3, wherein the rubber modifier is selected from a wax.

5. The method according to claim 4, wherein the wax is selected from the group consisting of paraffin wax, microcrystalline wax, synthetic wax, wax from natural sources such as from honey bees, carnauba and combinations thereof, particularly wherein the wax includes branched and/or unbranched hydrocarbons, having the main fraction with a carbon chain length from C15 to C100.

6. The method according to any one of claims 1 to 5, wherein the solid-based weight ratio of the latex to the polymer with functional groups selected from carboxylic acid groups, sulfonic acid groups or phosphonic acid groups, is in the range of 10 to 75, preferably 10 to 50.

7. The method according to any one of claims 1 to 6, wherein the volatile base is selected from ammonium hydroxide.

8. An aqueous dipping composition for textile reinforcing materials, particularly cords, obtainable by the method according to any one of claims 1 to 7.

9. A dipping process **characterized by** the steps of heat treating a textile reinforcing material, particularly cord, dipped with the aqueous dipping composition according to claim 8, particularly at 60-260°C.

10. A textile reinforcing material selected from polyesters, polyamides, polyurethanes, glass, carbon, celluloses, polycarbonates, polyketones and combinations, preferably selected from polyethylene terephthalate, polyethylene naphthalate, rayon, aramid, nylon 6.6, nylon 6 and combinations thereof, which is processed by the process according to claim 9.

## Patentansprüche

1. Verfahren zur Herstellung einer wässrigen Tauchlösung für textile Verstärkungsmaterialien, insbesondere Cords, **gekennzeichnet durch** die folgenden Schritte:
- Zugeben von mindestens einem Polymer mit funktionellen Gruppen, ausgewählt aus Carbonsäuregruppen, Sulfonsäuregruppen oder Phosphonsäuregruppen, in Wasser,
- Einstellen des pH-Werts auf pH 5-11 durch Zugeben einer flüchtigen Base, ausgewählt aus Ammoniumhydroxid oder Ammoniak,
- Hinzufügen von mindestens einem Latex, wobei der mindestens eine Latex ein Vinylpyridin-(VP)-Latex ist,
- optional Zugeben von mindestens eines Kautschukmodifikators, ausgewählt aus der Gruppe, bestehend aus Ruß, Kieselsäure, Lignin, Töpfertonpulver, Glimmerpulver, Kaolin, Bentonit, flüssigem Paraffin, festem Paraffin oder Wachs oder Kombinationen davon, zu der Zusammensetzung,
- Erhalten der wässrigen Eintauchzusammensetzung,
wobei das Feststoff-basierte Gewichtsverhältnis des Latex zu dem Polymer mit funktionellen Gruppen, ausgewählt aus Carbonsäuregruppen, Sulfonsäuregruppen oder Phosphonsäuregruppen, mindestens 5 beträgt,
unter der Voraussetzung, dass die erhaltene Tauchzusammensetzung im Wesentlichen frei von Resorcin, Formaldehyd, Epoxidharz und Isocyanat ist und dass primäre und sekundäre Amine nicht vorhanden sind,
wobei die wässrige Tauchzusammensetzung mindestens ein Polymer mit funktionellen Gruppen, ausgewählt aus Carbonsäuregruppen, Sulfonsäuregruppen oder Phosphonsäuregruppen, in einer Menge von 0,1 bis 15 Gew.-%, mindestens einen Latex in einer Menge von 75 bis 97,5 Gew.-% und gegebenenfalls mindestens einen Kautschukmodifikator in einer Menge von 1 bis 25 Gew.-%, bezogen auf das Gesamtfeststoffgewicht der wässrigen Tauchlösung, umfasst.

2. Verfahren nach Anspruch 1, wobei der Latex ein Styroly-Butadien-Vinylpyridin-Kautschuklatex ist, vorzugsweise ein Styrol-Butadien-Vinylpyridin-Kautschuklatex, der 10-20 Gew.-% 2-Vinylpyridin, 10-20 Gew.-% Styrol und 60-80 Gew.-% Butadienmonomere enthält.

3. Verfahren nach Anspruch 1 oder 2, wobei das Polymer mit Carbonsäure-Funktionsgruppen aus Monomeren abgeleitet ist, die aus Acrylsäure, Methacrylsäure, Estern der Acrylsäure, Estern der Methacrylsäure, Itaconsäure, Crotonsäure, Zimtsäure, Maleinsäure und Kombinationen davon ausgewählt sind.

4. Verfahren nach einem der Ansprüche 1 bis 3, wobei der Kautschukmodifikator aus einem Wachs ausgewählt ist.

5. Verfahren nach Anspruch 4, wobei das Wachs ausgewählt ist aus der Gruppe, bestehend aus Paraffinwachs, mikrokristallinem Wachs, synthetischem Wachs, Wachs aus natürlichen Quellen wie beispielsweise Honigbienenwachs, Carnaubawachs und Kombinationen davon, insbesondere wobei das Wachs verzweigte und/oder unverzweigte Kohlenwasserstoffe enthält, deren Hauptanteil eine Kohlenstoffkettenlänge von C15 bis C100 aufweist.

6. Verfahren nach einem der Ansprüche 1 bis 5, wobei das Ferststoff-basierte Gewichtsverhältnis des Latex zu dem Polymer mit funktionellen Gruppen, ausgewählt aus Carbonsäuregruppen, Sulfonsäuregruppen oder Phosphonsäuregruppen, im Bereich von 10 bis 75, vorzugsweise 10 und 50, liegt.

7. Verfahren nach einem der Ansprüche 1 bis 6, wobei die flüchtige Base aus Ammoniumhydroxid ausgewählt ist.

8. Wässrige Tauchzusammensetzung für textile Verstärkungsmaterialien, insbesondere Cords, erhältlich durch das Verfahren gemäß einem der Ansprüche 1 bis 7.

9. Tauchverfahren, **gekennzeichnet durch** die Schritte des Wärmebehandelns eines mit der wässrigen Tauchzusammensetzung nach Anspruch 8 getauchten Textilverstärkungsmaterials, insbesondere Cord, insbesondere bei 60-260°C.

10. Textilverstärkungsmaterial, ausgewählt aus Polyestern, Polyamiden, Polyurethanen, Glas, Kohlenstoff, Cellulose, Polycarbonaten, Polyketonen und Kombinationen davon, vorzugsweise ausgewählt aus Polyethylenterephthalat, Polyethylennaphthalat, Viskose, Aramid, Nylon 6,6, Nylon 6 und Kombinationen davon, das nach dem Verfahren gemäß Anspruch 9 verarbeitet worden ist.

## Revendications

1. Procédé de production d'une composition d'immersion aqueuse pour des matériaux de renforcement de textile, notamment des cordes, **caractérisé par** les étapes consistant à
- ajouter au moins un polymère avec des groupes fonctionnels sélectionnés parmi des groupes acide carboxylique, des groupes acide sulfonique ou des groupes acide phosphonique, dans de l'eau,
- ajuster la valeur de pH jusqu'à pH 5 à 11 en ajoutant une base volatile sélectionnée parmi l'hydroxyde d'ammonium ou l'ammoniaque,
- ajouter au moins un latex, dans lequel l'au moins un latex est un latex de vinylpyridine (VP),
- ajouter en option au moins un modificateur de caoutchouc sélectionné parmi le groupe constitué du noir de carbone, de la silice, de la lignine, d'une poudre d'argile pour poterie, d'une poudre de mica, du kaolin, de la bentonite, de paraffine liquide, de paraffine solide ou de cire ou de combinaisons de ceux-ci, à la composition,
- obtenir la composition d'immersion aqueuse,
dans lequel le rapport pondéral à base solide du latex sur le polymère avec des groupes fonctionnels sélectionnés parmi des groupes acide carboxylique, des groupes acide sulfonique ou des groupes acide phosphonique est d'au moins 5,
à condition que la composition d'immersion obtenue soit essentiellement exempte de résorcinol, formaldéhyde, époxy et isocyanate, et que des amines primaires et secondaires soient absentes,
dans lequel la composition d'immersion aqueuse comprend l'au moins un polymère avec des groupes fonctionnels sélectionnés parmi des groupes acide carboxylique, des groupes acide sulfonique ou des groupes acide phosphonique en une quantité de 0,1 à 15 % en poids, l'au moins un latex en une quantité de 75 à 97,5 % en poids et en option l'au moins un modificateur de caoutchouc en une quantité de 1 à 25 % en poids basées sur le poids solide total de la solution d'immersion aqueuse.

2. Procédé selon la revendication 1, dans lequel le latex est un latex de caoutchouc de styrène-butadiène-vinylpyridine, de préférence un latex de caoutchouc de styrène-butadiène-vinylpyridine comprenant 10 à 20 % en poids de 2-vinylpyridine, 10 à 20 % en poids de styrène et 60 à 80 % en poids de monomères de butadiène.

3. Procédé selon la revendication 1 ou 2, dans lequel le polymère avec des groupes fonctionnels d'acide carboxylique est dérivé de monomères sélectionnés parmi l'acide acrylique, l'acide méthacrylique, des esters d'acide acrylique, des esters d'acide méthacrylique, l'acide itaconique, l'acide crotonique, l'acide cinnamique, l'acide maléique et des combinaisons de ceux-ci.

4. Procédé selon l'une quelconque des revendications 1 à 3, dans lequel le modificateur de caoutchouc est sélectionné parmi une cire.

5. Procédé selon la revendication 4, dans lequel la cire est sélectionnée parmi le groupe constitué de la cire de paraffine, d'une cire microcristalline, d'une cire synthétique, de cire provenant de sources naturelles telles que d'abeilles, de carnauba et de combinaisons de celles-ci, notamment dans lequel la cire inclut des hydrocarbures ramifiés et/ou non ramifiés, ayant la fraction principale avec une longueur de chaîne de carbone de C15 à C100.

6. Procédé selon l'une quelconque des revendications 1 à 5, dans lequel le rapport pondéral à base solide du latex sur le polymère avec des groupes fonctionnels sélectionnés parmi des groupes acide carboxylique, des groupes acide sulfonique ou des groupes acide phosphonique est dans la plage de 10 à 75, de préférence 10 à 50.

7. Procédé selon l'une quelconque des revendications 1 à 6, dans lequel la base volatile est sélectionnée parmi l'hydroxyde d'ammonium.

8. Composition d'immersion aqueuse pour des matériaux de renforcement de textile, notamment des cordes, pouvant être obtenue par le procédé selon l'une quelconque des revendications 1 à 7.

9. Processus d'immersion **caractérisé par** les étapes de traitement thermique d'un matériau de renforcement de textile, notamment de corde, immergé avec la composition d'immersion aqueuse selon la revendication 8, notamment à une température de 60 à 260 °C.

10. Matériau de renforcement de textile sélectionné parmi des polyesters, des polyamides, des polyuréthanes, du verre, du carbone, des celluloses, des polycarbonates, des polycétones et des combinaisons, de préférence sélectionné parmi le polyéthylène téréphtalate, le polyéthylène naphtalate, la rayonne, l'aramide, le nylon 6.6, le nylon 6 et des combinaisons de ceux-ci, qui est traité par le processus selon la revendication 9.
